# FASCICULE DE BREVET EUROPEEN

(11) **EP 1 137 568 B1**
(45) Date de publication et mention de la délivrance du brevet: **14.05.2003**
(21) Numéro de dépôt: 99957369.4
(22) Date de dépôt: 06.12.1999
(51) Int. Cl.: B62H 1/12

(54) **VEHICULE DE TYPE MONOTRACE A ROUES STABILISATRICES ESCAMOTABLES ASSERVIES A LA VITESSE**
EINSPUHRFAHRZEUG MIT VON DER GESCHWINDIGKEIT ABHÄNGIGEN, AUSSCHWENKBAREN STABILISIERUNGSRÄDERN
TWO-WHEEL VEHICLE WITH SPEED-CONTROLLED RETRACTABLE STABILISING WHEELS

(30) Priorité: 08.12.1998 FR 9815476
(43) Date de publication de la demande: 04.10.2001
(73) Titulaire: Gillet, Pierre, 10180 Saint Lye (FR); Lhermitte, Damien, 10150 Voue (FR)
(72) Inventeur: Gillet, Pierre, 10180 Saint Lye (FR); Lhermitte, Damien, 10150 Voue (FR)
(74) Mandataire: Poulin, Gérard
(86) Numéro de dépôt international: FR9903020
(87) Numéro de publication internationale: WO00034112

(56) Documents cités:
- US-A- 4 203 500
- US-A- 5 029 894
- US-A- 5 378 020

## Description

### Domaine technique

L'invention concerne un véhicule de type "monotrace", c'est-à-dire un véhicule équipé de deux roues principales alignées et de deux roues stabilisatrices latérales escamotables.

### Etat de la technique

Les véhicules à deux roues tels que les bicyclettes, les vélomoteurs, les motocyclettes, etc.. sont particulièrement adaptés à la circulation urbaine, du fait de leur largeur réduite et de leur maniabilité sensiblement supérieure à celle des véhicules automobiles à quatre roues.

En revanche, les véhicules à deux roues ont pour inconvénient une perte progressive de l'équilibre lorsqu'ils ralentissent en deçà d'une certaine vitesse. Cela conduit leurs utilisateurs à mettre au moins un pied à terre lorsque le véhicule est à l'arrêt.

Cette nécessité inhérente aux véhicules à deux roues rend pratiquement impossible l'installation d'un habitacle fermé sur le véhicule. Les utilisateurs de celui-ci sont donc protégés au mieux vers l'avant par un tablier éventuellement surmonté d'un pare-brise, comme sur les véhicules de type scooter et, dans certains cas exceptionnels, par un toit prolongeant le tablier avant au-dessus des utilisateurs, éventuellement jusqu'à l'arrière du véhicule.

Par conséquent, les véhicules à deux roues de conception classique ont pour inconvénients d'exposer leurs utilisateurs aux intempéries et surtout aux risques de chocs latéraux et d'éjection, en cas d'accident.

Une solution à ces problèmes a été proposée, en 1925, sur un véhicule appelé "Monotrace". Ce véhicule, entièrement caréné, était doté de deux roues principales alignées et de deux roues stabilisatrices latérales s'opposant à sa chute au moment de l'arrêt.

D'autres véhicules fondés sur le même principe ont été proposés depuis, parmi lesquels on citera notamment le véhicule décrit dans le document WO-A-98 23478.

Tous ces véhicules, habituellement appelés "monotraces", se caractérisent par le fait que les roues stabilisatrices sont escamotables et commandées directement par le conducteur du véhicule. En d'autres termes, celui-ci dispose d'une manette ou d'une pédale qui lui permet de faire passer les roues stabilisatrices d'un état escamoté dans un état actif, et inversement, lorsqu'il en éprouve le besoin.

Dans le document US-A-5 029 894, sur lequel se fonde le préambule de la revendication 1, une motocyclette dotée de deux roues latérales rétractables dispose d'une manette permettant de commander automatiquement la montée et la descente de ces roues, pour une vitesse choisie de la motocyclette.

La conduite des véhicules de type "monotrace" développés jusqu'à présent est particulièrement délicate et nécessite un entraînement spécial.

En effet, le fait de déclencher manuellement la descente des roues stabilisatrices contraint le conducteur à une certaine vigilance lors des décélérations.

De plus, le changement brutal de comportement du véhicule, lorsqu'il passe de deux roues à quatre roues, et inversement, n'est pas sans poser certains problèmes. En effet, la conduite des véhicules à deux et à quatre roues diffère sensiblement.

Ainsi, la conduite et la maniabilité d'un véhicule à deux roues se caractérisent principalement par la possibilité d'incliner ce véhicule d'un côté et de l'autre, ce qui devient brutalement impossible lorsqu'on déploie les roues stabilisatrices latérales des véhicules de type monotrace existants.

Par ailleurs, quand les roues stabilisatrices latérales d'un tel véhicule sont sorties, les inégalités du sol se traduisent soit par un basculement désagréable du véhicule sur un côté lorsque l'une des roues stabilisatrices est en face d'un trou, soit par un risque de perte de motricité lorsque l'une des roues stabilisatrices est en face d'une bosse à l'arrêt du véhicule.

### Exposé de l'invention

L'invention a pour objet un véhicule de type monotrace, dont la conception originale lui permet d'être piloté par un conducteur n'ayant pas suivi d'entraînement particulier, sans nécessiter une attention plus soutenue que pour la conduite de tout autre véhicule à deux ou quatre roues.

Conformément à l'invention, ce résultat est obtenu au moyen d'un véhicule de type monotrace, comprenant un châssis apte à reposer sur le sol par deux roues principales alignées et par deux roues stabilisatrices latérales escamotables, ledit véhicule comprenant de plus des moyens de mesure de vitesse aptes à mesurer la vitesse de déplacement du véhicule, et des moyens de commande automatique des roues stabilisatrices, sensibles à la vitesse mesurée par lesdits moyens de mesure de vitesse pour placer automatiquement les roues stabilisatrices dans un état escamoté lorsque la vitesse mesurée excède un seuil prédéterminé, et dans un état actif lorsque la vitesse mesurée est inférieure audit seuil, caractérisé en ce que des moyens amortisseurs, à rigidité réglable, sont associés à chacune des roues stabilisatrices, et des moyens de régulation d'amortissement asservissent automatiquement la rigidité de chacun des moyens amortisseurs à la vitesse de déplacement du véhicule, lorsque les roues stabilisatrices sont dans leur état actif, de façon telle que la rigidité varie en sens inverse de la vitesse.

Ainsi, l'invention permet d'améliorer sensiblement la facilité de conduite d'un véhicule de type monotrace, du fait que le passage d'un véhicule de type deux roues à un véhicule de type quatre roues ne s'effectue pas brutalement, mais progressivement, et inversement.

Il est à noter que le fait de contrôler la réaction des roues stabilisatrices de manière active, permet de limiter la largeur hors tout des monotraces : par exemple à un mètre.

Lorsque les roues stabilisatrices sont dans leur état actif, le véhicule possède quatre réactions d'appui dues, d'une part, aux deux roues principales alignées et, d'autre part, aux deux roues stabilisatrices. Son comportement dynamique se rapproche alors de celui d'un véhicule à quatre roues classique.

La force centrifuge en virage agit alors de telle sorte qu'elle tend à incliner le plan médian du véhicule vers l'extérieur du virage.

Afin de lutter contre cette tendance, des moyens sont avantageusement prévus pour détecter une inclinaison du plan médian du véhicule par rapport à la verticale, de façon à commander un asservissement automatique de la rigidité de chacun des moyens amortisseurs, lorsque les roues stabilisatrices sont dans leur état actif, pour ramener ledit plan médian vers la verticale, de façon inversement proportionnelle à la vitesse.

Avantageusement, les moyens amortisseurs occupent alors un état rétracté lorsque les roues stabilisatrices sont dans leur état escamoté ainsi que lorsque les moyens de commande automatique sont actionnés pour commander un basculement entre les états escamoté et actif des roues stabilisatrices.

De préférence, lorsque les roues stabilisatrices sont dans leur état actif et lorsque les moyens amortisseurs occupent leur état rétracté, les roues stabilisatrices sont situées à une hauteur prédéterminée, par exemple d'environ 60 mm, au-dessus d'un plan de contact des roues principales avec le sol, ce plan étant perpendiculaire au plan médian du véhicule.

Des moyens sont avantageusement prévus pour détecter un passage des roues stabilisatrices dans leur état actif. Les moyens de régulation d'amortissement sont alors sensibles à la détection de ce passage pour commander automatiquement un actionnement des moyens amortisseurs jusqu'à la venue en contact des roues stabilisatrices avec le sol, suivi d'un asservissement automatique de leur rigidité.

De préférence, des moyens sont aussi prévus pour détecter un passage des moyens amortisseurs dans leur état rétracté. Les moyens de commande automatique sont alors sensibles à la détection de ce passage pour ramener automatiquement les roues stabilisatrices dans leur état escamoté.

Selon un mode de réalisation particulier de l'invention, les moyens amortisseurs associés à chacune des roues stabilisatrices comprennent un vérin amortisseur pneumatique qui inclut une chambre supérieure, de réglage de rigidité, et une chambre inférieure, de commande d'état rétracté.

Les moyens de régulation d'amortissement comprennent, de préférence, un circuit d'alimentation en air comprimé de la chambre de réglage de rigidité de chacun des moyens amortisseurs. Ce circuit inclut un moyen commun apte à régler la pression d'air comprimé dirigée vers lesdites chambres des moyens amortisseurs à une pression de consigne inversement proportionnelle à la vitesse de déplacement du véhicule.

Avantageusement, les moyens de régulation d'amortissement comprennent de plus un circuit de limitation de pression indépendant pour chacun des moyens amortisseurs, chaque circuit de limitation de pression étant apte à relier la chambre de réglage de rigidité de l'un desdits moyens amortisseurs au circuit d'alimentation, au travers d'un moyen apte à comparer la pression effective régnant dans ladite chambre à la pression de consigne, pour mettre cette chambre en communication avec le circuit d'alimentation lorsque la pression effective est inférieure à la pression de consigne, et avec l'atmosphère dans le cas contraire.

Le moyen apte à comparer la pression effective à la pression de consigne est, de préférence, une vanne d'échappement rapide commandée par un tiroir sensible à deux pressions antagonistes correspondant respectivement à la pression effective et à la pression de consigne.

Un distributeur normalement fermé est avantageusement placé entre l'atmosphère et le moyen apte à comparer la pression effective à la pression de consigne, une ouverture du distributeur étant commandée automatiquement lors du passage des roues stabilisatrices dans leur état actif.

Dans le mode de réalisation préféré de l'invention, chacune des roues stabilisatrices est reliée au châssis par un mécanisme apte à se déployer et à se verrouiller automatiquement, par gravité, pour amener cette roue dans son état actif, en cas de défaillance des moyens de commande automatique.

Les moyens de commande automatique peuvent présenter différentes formes, sans sortir du cadre de l'invention. Dans le mode de réalisation préféré, ils comprennent deux vérins pneumatiques de mise en position, munis chacun de deux chambres de commande opposées, aptes à être reliées à tour de rôle à une source d'air comprimé, par l'intermédiaire d'un distributeur commun à centre fermé. Cet agencement assure le maintien en position 'des roues stabilisatrices, même dans l'hypothèse d'une coupure pneumatique ou électrique pendant leur déploiement.

En outre, de préférence, des moyens d'assistance de direction, automatiquement déconnectés lorsque la vitesse du véhicule excède ledit seuil, assistent la direction du véhicule de façon inversement proportionnelle à la vitesse du véhicule et proportionnelle au couple de direction mesuré par un capteur approprié.

### Brève description des dessins

On décrira à présent, à titre d'exemple non limitatif, un mode de réalisation préféré de l'invention, en se référant aux dessins annexés, dans lesquels :
- la figure 1 est une vue de côté, avec arrachement partiel, qui représente schématiquement un véhicule de type monotrace conforme à l'invention ;

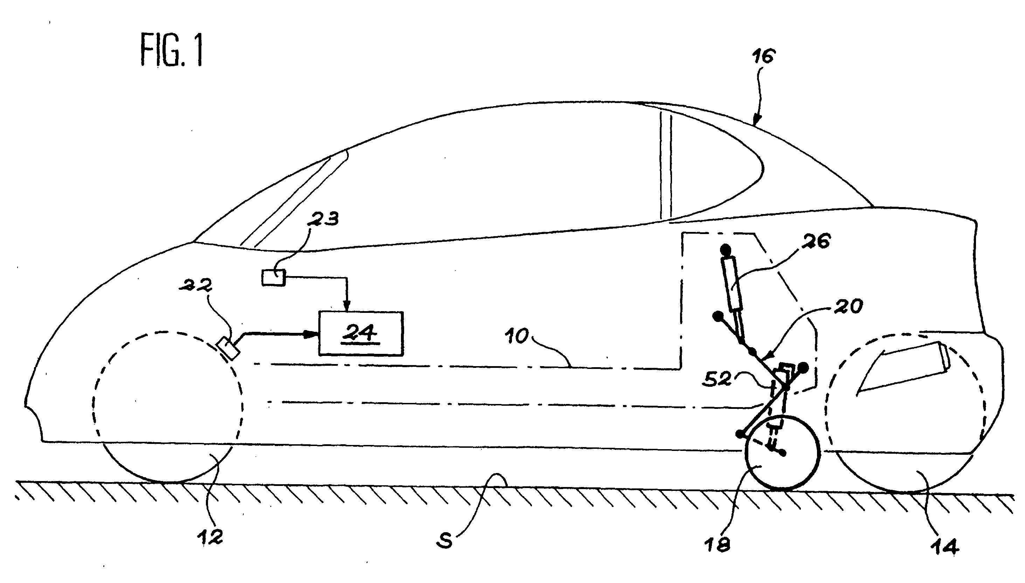

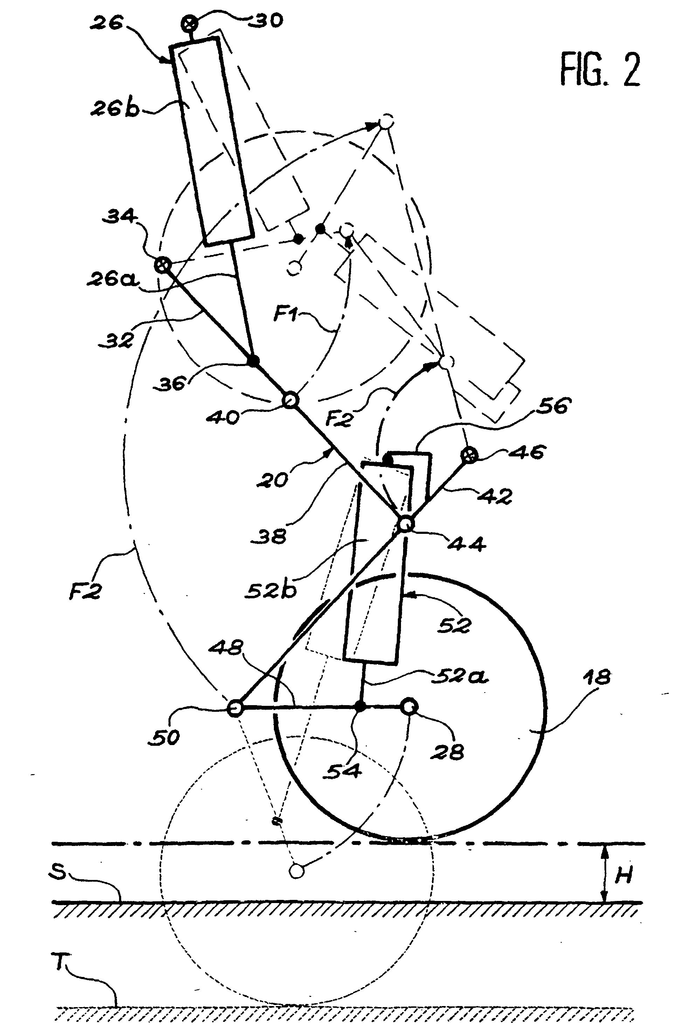

- la figure 2 est une vue de côté, illustrant à plus grande échelle, sous la forme d'un schéma fonctionnel, la cinématique de déploiement d'une roue stabilisatrice du véhicule de la figure 1, le mécanisme associé à cette roue étant illustré schématiquement en trait plein lorsque la roue est dans son état actif et lorsque les moyens amortisseurs qui lui sont associés occupent leur état rétracté, en trait tireté fin, lorsque la roue stabilisatrice est dans son état escamoté et en trait pointillé fin lorsque cette roue est dans son état actif et lorsque les moyens amortisseurs sont en pleine extension ;
- les figures 3A et 3B sont des vues de face qui représentent schématiquement la roue arrière du véhicule et l'une des roues stabilisatrices dans son état actif, alors que les moyens amortisseurs occupent leur état rétracté, la figure 3A correspondant au cas où le plan médian du véhicule est vertical et la figure 3B correspondant au cas où ce plan médian est incliné du côté de la roue stabilisatrice représentée ;
- la figure 3C est une vue comparable à la figure 3B, illustrant le fonctionnement de moyens de détection d'inclinaison équipant le véhicule ;
- les figures 4A à 4C sont des vues comparables aux figures 3A et 3B, illustrant le cas où la roue stabilisatrice est en contact avec le sol, celui-ci étant parfaitement horizontal sur la figure 4A, présentant une bosse en face de la roue stabilisatrice sur la figure 4B et présentant un creux en face de la roue stabilisatrice sur la figue 4C ;
- la figure 5 représente le schéma des circuits pneumatiques et électriques de commande des roues stabilisatrices du véhicule ; et
- la figure 6 illustre schématiquement l'implantation d'un système de direction assistée sur le véhicule.

### Description détaillée d'un mode de réalisation préféré de l'invention

Sur la figure 1, on a représenté de façon très schématique, un véhicule de type monotrace conforme à l'invention. Ce véhicule comprend un châssis 10, dont seule une petite partie apparaît sur la figure. Ce châssis 10 repose sur le sol S par une roue avant directrice 12 et une roue arrière motrice 14. Lorsque le véhicule se déplace en ligne droite, les roues 12 et 14 sont alignées selon un plan médian du véhicule, parallèle au plan de la figure 1. Lorsque l'assiette du véhicule est horizontale, ce plan médian est vertical. Les roues avant 12 et arrière 14 constituent les roues principales du véhicule.

Le véhicule selon l'invention est également doté d'un habitacle 16, de préférence entièrement fermé à la manière d'un habitacle de véhicule automobile à quatre roues. Il présente ainsi un confort et une sécurité comparables à ceux d'un tel véhicule, tout en étant d'un encombrement latéral réduit et d'une maniabilité comparable à celle d'une motocyclette, comme on le comprendra mieux par la suite.

Le véhicule conforme à l'invention est doté, par ailleurs de tous les équipements fonctionnels, de sécurité et de confort équipant habituellement les motocyclettes et les véhicules automobiles à quatre roues. Ces équipements (non représentés) incluent notamment un bloc moteur assurant l'entraînement de la roue arrière 14, des selles ou des sièges pour le conducteur et au moins un passager et différents organes de commande et cadrans à la disposition du conducteur.

Pour assurer la stabilité du véhicule à l'arrêt et à faible vitesse, le véhicule selon l'invention est également équipé, de part et d'autre de son plan médian, de deux roues stabilisatrices latérales, désignées par la référence 18, dont une seule est visible sur la figure 1. Les roues stabilisatrices 18 sont montées sur le châssis 10 du véhicule, à proximité de la roue arrière 14 et légèrement en avant par rapport à celle-ci.

Plus précisément, chacune des roues stabilisatrices latérales 18 est reliée au châssis 10 du véhicule par un mécanisme articulé 20 qui sera décrit en détail ultérieurement. Ce mécanisme articulé est conçu de façon à pouvoir déplacer la roue stabilisatrice 18 qu'il supporte d'un état escamoté dans un état actif, et inversement.

Lorsque les roues stabilisatrices 18 sont dans leur état escamoté, elles sont effacées pratiquement en totalité à l'intérieur de l'enveloppe de l'habitacle 16 du véhicule, de telle sorte que ce dernier se comporte alors totalement à la manière d'une motocyclette apte à s'incliner dans les virages.

A l'inverse, lorsque les roues stabilisatrices 18 sont dans leur état actif, elles sont sorties de part et d'autre de l'habitacle 16 du véhicule, de manière à pouvoir constituer des appuis propres à stabiliser celui-ci lorsque le véhicule est à l'arrêt ou se déplace à faible vitesse.

Selon une caractéristique essentielle de l'invention, les roues stabilisatrices latérales 18 passent automatiquement de leur état escamoté dans leur état actif lorsque la vitesse du véhicule devient inférieure à un seuil prédéterminé, et inversement.

A cet effet, le véhicule est doté de moyens 22 de mesure de vitesse. Ces moyens 22 peuvent être constitués par tout capteur de vitesse susceptible d'être monté sur un véhicule et notamment par un capteur placé sur la roue avant 12 et fournissant par ailleurs une information de vitesse au conducteur du véhicule.

Le véhicule est aussi équipé de moyens 23 aptes à détecter une inclinaison de son plan médian, par rapport à la verticale. Ces moyens 23 de détection d'inclinaison peuvent être constitués par tout moyen approprié, tel qu'un détecteur à mercure, un accéléromètre, etc..

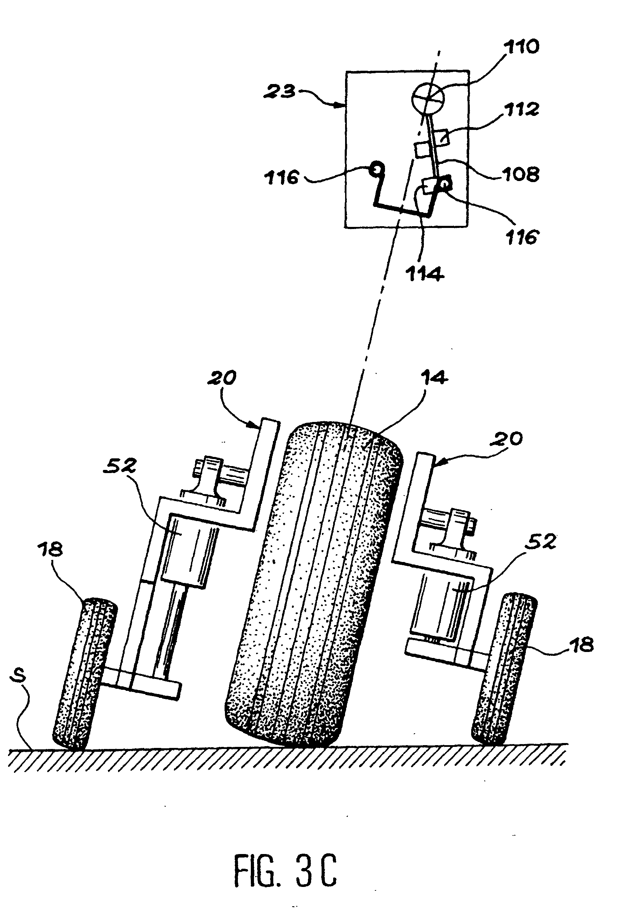

Dans le mode de réalisation préféré de l'invention illustré sur la figure 3C, les moyens de détection d'inclinaison 23 comprenant un balancier 108, pivotant autour d'un axe 110, fixé sur le châssis du véhicule, dans le plan médian de celui-ci et selon son axe longitudinal. Une masse à inertie 112, pouvant être déplacée sur la tige du balancier 108, sert à régler la sensibilité et l'amplitude des oscillations du balancier. Une plaque métallique 114 est fixée à l'extrémité inférieure de la tige du balancier 108.

Les moyens de détection d'inclinaison 23 comprennent également deux capteurs inductifs 116, aptes à détecter la présence de la plaque métallique 114. Ces capteurs 116 sont fixés sur le châssis du véhicule en un emplacement tel que la plaque passe à environ 2 mm devant la surface des capteurs, lors des oscillations du balancier 108. De plus, les capteurs 116 sont situés à une distance prédéterminée du plan médian du véhicule, cette distance correspondant à une inclinaison d'environ un degré dudit plan médian par rapport à la verticale. Par conséquent, lorsque le véhicule s'incline au moins de un degré par rapport à la verticale, le balancier 108 effectue une rotation qui amène la plaque métallique 114 en face de l'un des capteurs inductifs 116. Ce dernier détecte la présence de métal et délivre un signal jusqu'à ce que la plaque métallique 114 ne soit plus en face du capteur.

Le véhicule conforme à l'invention comprend de plus des moyens de commande automatique des roues stabilisatrices 18, sensibles à la vitesse du véhicule mesurée par les moyens 22 de mesure de vitesse, pour placer automatiquement les roues stabilisatrices 18 dans leur état escamoté ou dans leur état actif, selon que le seuil de vitesse prédéterminé est franchi dans le sens de l'accélération ou dans le sens du ralentissement, respectivement.

Dans le mode de réalisation préféré décrit, les moyens de commande automatique comprennent un circuit électronique, illustré schématiquement en 24 sur la figure 1, et deux vérins pneumatiques 26 de mise en position, interposés entre le châssis 10 et chacun des mécanismes articulés 20.

Le circuit électronique 24 reçoit les signaux de vitesse émis par les moyens 22 de mesure de vitesse, les compare à un seuil prédéterminé qui correspond à la limite d'équilibre instable du véhicule dépourvu de stabilisateurs, et commande l'émission des signaux de mise en oeuvre des deux vérins pneumatiques 26 de mise en position, dans l'un ou l'autre sens, selon les résultats de cette comparaison. A titre d'illustration nullement limitative, le seuil de vitesse peut être fixé à 20 km/h environ.

Le circuit électronique 24 reçoit également les signaux d'inclinaison émis par les capteurs inductifs 116. Comme on le décrira plus en détail par la suite, lorsque les stabilisateurs sont sortis, c'est-à-dire lorsque la vitesse du véhicule est inférieure au seuil prédéterminé, les signaux émis par les capteurs 116 sont exploités par le circuit électronique 24 pour redresser le véhicule. De plus, la correction d'inclinaison ainsi effectuée est proportionnelle à la vitesse.

Il est à noter qu'en variante, les vérins pneumatiques 26 de mise en position peuvent être remplacés par tout autre type d'actionneurs tels que des vis sans fin à commande électrique, des vis à bille, des crémaillères, etc..

On décrira à présent plus en détail un exemple de réalisation du mécanisme articulé 20 supportant chacune des roues stabilisatrices latérales 18, en se référant à la figure 2.

Comme l'illustre cette figure, chaque mécanisme articulé 20 relie l'extrémité inférieure de la tige de commande 26a du vérin pneumatique 26 de mise en position à un arbre 28 supportant la roue stabilisatrice 18, de telle sorte que celle-ci puisse tourner librement autour de son axe. Par ailleurs, le corps 26b du vérin 26 est articulé par un axe 30 au châssis 10 ou à un organe solidaire de celui-ci.

Le mécanisme articulé 20 comprend une première biellette 32 dont une extrémité est articulée sur le châssis 10 ou sur un organe solidaire de celui-ci, par un axe 34. L'extrémité de la tige 26a du vérin 26 est articulée sur cette première biellette 32 par un axe d'articulation 36 relativement éloigné de l'axe fixe 34.

Par ailleurs, la deuxième extrémité de la biellette 32 est articulée sur une extrémité d'une deuxième biellette 38, par un axe d'articulation 40. La deuxième extrémité de cette biellette 38 est elle-même articulée sur une troisième biellette 42, par un axe d'articulation 44. Cet axe d'articulation 44 est relativement proche d'une extrémité de la biellette 42, articulée sur le châssis 10 ou sur un organe lié à ce châssis, par un axe fixe 46.

A son tour, la deuxième extrémité de la troisième biellette 42 est articulée sur une extrémité d'une quatrième biellette 48, par un axe d'articulation 50. La deuxième extrémité de la biellette 48 porte la roue stabilisatrice 18 correspondante, par l'intermédiaire de l'arbre 28.

Enfin, des moyens amortisseurs, comprenant de préférence un vérin amortisseur pneumatique 52 sont interposés entre la biellette 42, ou un organe solidaire de celle-ci, et la biellette 48. De façon plus précise, l'extrémité basse de la tige 52a du vérin 52 est articulée sur la biellette 48 par un axe d'articulation 54 et l'extrémité haute du corps 52b du vérin 52 est articulée une pièce de liaison 56, elle-même liée à la biellette 42.

Les axes 30, 34, 36, 40, 44, 46, 50 et 54 ainsi que l'arbre 28 sont parallèles entre eux et perpendiculaires au plan médian du véhicule.

Comme on l'a représenté en trait plein sur la figure 2, dans l'état actif de chacune des roues stabilisatrices 18, déterminé par l'état d'allongement maximal du vérin 26 de mise en position, les biellettes 32 et 38 sont alignées et inclinées vers le bas et vers l'arrière à partir de l'axe fixe 34. La biellette 42 est alors inclinée vers le bas et vers l'avant à partir de l'axe fixe 46, en formant sensiblement un angle droit avec les biellettes 32 et 38. Lorsque le vérin amortisseur 52 est dans son état rétracté, la biellette 48 est alors sensiblement horizontale et orientée vers l'arrière à partir de l'axe d'articulation 50.

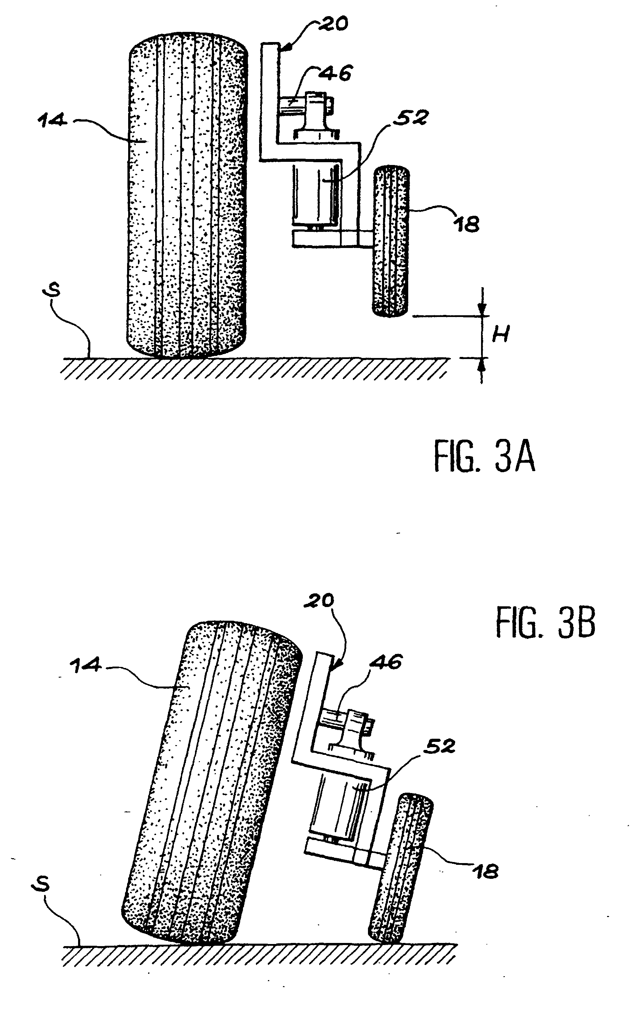

Dans ces conditions, et comme l'illustre également la figure 3A, chacune des roues stabilisatrices 18 est située à une hauteur prédéterminée H au-dessus d'un plan de contact des roues principales 12 et 14 du véhicule avec le sol, ce plan de contact étant perpendiculaire au plan médian du véhicule. Par conséquent, lorsque le sol S est plan et horizontal, et lorsque le véhicule n'est pas incliné, chacune des roues stabilisatrices 18 se trouve à ladite hauteur prédéterminée H au-dessus du sol. Cette hauteur prédéterminée H est, par exemple, égale à au moins 60 mm.

Cet état du mécanisme articulé 20, qui correspond à une position intermédiaire lors du déploiement des roues stabilisatrices 18, permet de ne pas induire un redressement brutal et dangereux du véhicule lorsque celui-ci est incliné au moment du déploiement, comme l'illustre schématiquement la figure 3B.

Il est à noter que dans cet état du mécanisme articulé 20, une butée (non représentée) interdit à la biellette 38 de pivoter vers le haut, autour de l'axe d'articulation 40, au-delà de sa position d'alignement avec la première biellette 32, illustrée en trait plein sur la figure 2.

L'alignement des biellettes 32 et 38 s'initie d'abord grâce au vérin 26, puis s'entretient grâce à la réaction de la roue 18 sur le sol S.

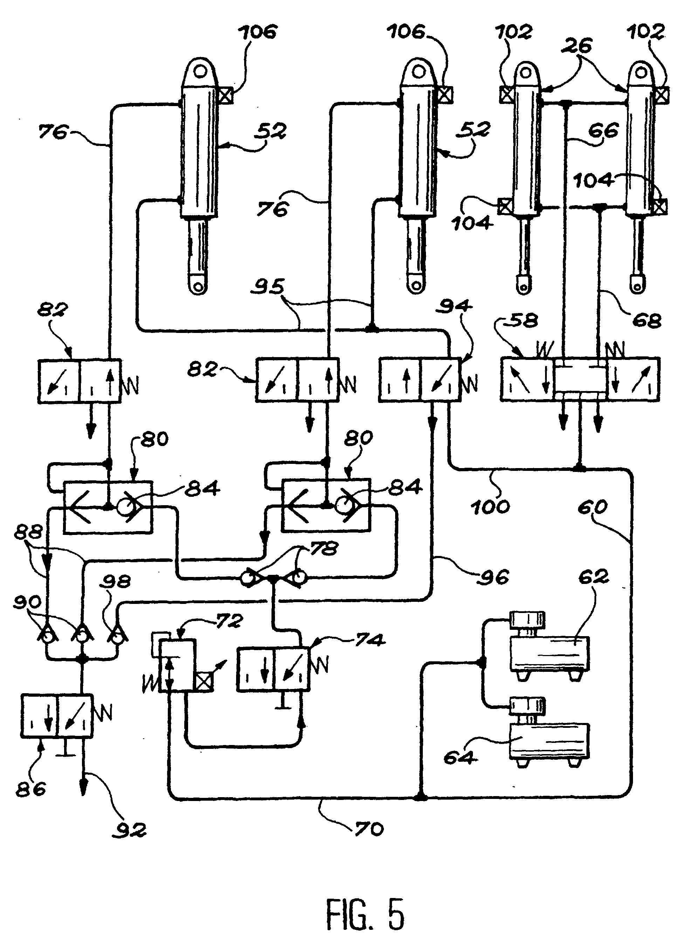

Lorsque le véhicule roule en marche avant, les biellettes 32 et 38 forment alors un tirant rectiligne qui est entraîné vers le bas et ainsi empêche la biellette 42 de pivoter autour de l'axe fixe 46. Aucun autre moyen n'est nécessaire pour éviter que le stabilisateur ne s'escamote involontairement. L'alignement des biellettes 32 et 38 est de plus maintenu par blocage pneumatique de la tige du vérin 26, grâce à un distributeur 58 à centre fermé (figure 5) qui sera décrit ultérieurement.

Lorsque le véhicule est à l'arrêt ou roule en marche arrière, l'alignement des biellettes 32 et 38 est assuré principalement par la géométrie du stabilisateur qui suffit à empêcher le pivotement de la biellette 42 autour de l'axe 46, car le tirant formé par les biellettes 32 et 38 forme sensiblement un angle droit avec la biellette 42. L'alignement des biellettes 32 et 38 est de plus maintenu par blocage pneumatique de la tige du vérin 26, grâce au distributeur 58 à centre fermé.

Lorsque le vérin 26 de mise en position est amené dans sa position rétractée, comme on l'a représenté en trait tireté fin sur la figure 2, la première biellette 32 pivote vers le haut autour de l'axe fixe 34, par exemple d'environ 60°, comme l'illustre la flèche F1. Etant donné que la première biellette 32 est reliée à la troisième biellette 42 par la deuxième biellette 38, par l'intermédiaire des axes d'articulation 40 et 44, ce pivotement de la première biellette entraîne un pivotement en sens inverse de la troisième biellette 42 autour de l'axe fixe 46, comme on l'a illustré par les flèches F2. Ce pivotement, dont l'amplitude est, par exemple, d'environ 120°, s'effectue également vers le haut.

Au cours de ces pivotements, le vérin amortisseur 52 reste dans son état rétracté, de sorte que l'ensemble constitué par les biellettes 42 et 48, le vérin 52 et la roue 18 tourne sans se déformer autour de l'axe fixe 46, pour prendre la position illustrée en trait tireté fin sur la figure 2. Cette position correspond à l'état rétracté des roues stabilisatrices 18. Comme on l'a déjà observé, cet état rétracté est défini de façon que les roues stabilisatrices soient presque entièrement escamotées à l'intérieur de l'habitacle 16 et autorisent une inclinaison du plan médian du véhicule par rapport à la verticale, de façon analogue à celle d'une motocyclette, par exemple d'environ 45°.

Lorsque le mécanisme articulé 20 de chacune des roues stabilisatrices 18 occupe la position rétractée illustrée en trait tireté fin sur la figure 2, le stabilisateur peut, en cas de panne électrique ou pneumatique (ou les deux), se déployer et se verrouiller automatiquement en urgence, sans l'intervention d'aucune sorte d'énergie. Le stabilisateur se maintiendra en position, uniquement grâce à sa cinématique, pour les raisons précédemment citées. L'inclinaison maximale du plan médian du véhicule dans cette situation d'urgence correspond alors à la hauteur H. Cet agencement constitue une sécurité qui permet de garantir la stabilité du véhicule à basse vitesse et à l'arrêt, dans de telles conditions d'urgence.

Dans le mode de réalisation préféré de l'invention, les moyens amortisseurs comprenant les vérins amortisseurs pneumatiques 52 présentent une rigidité réglable et sont actionnés automatiquement, à la fin du déploiement des vérins 26, de façon à amener les roues stabilisatrices 18 en contact avec le sol S, puis à asservir leur rigidité à la vitesse mesurée par les moyens 22 (figure 1) de mesure de vitesse du véhicule.

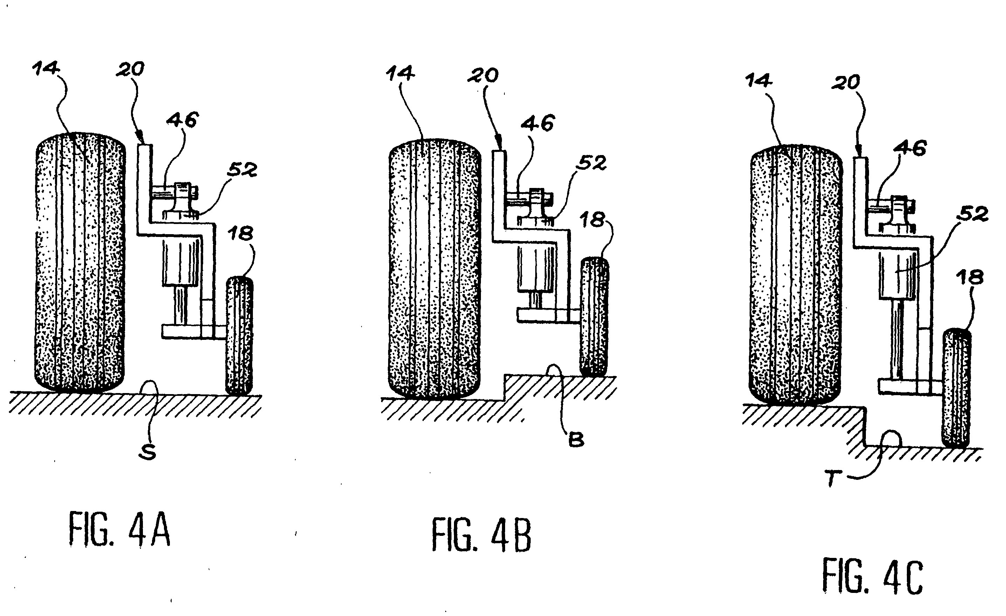

Cette étape d'actionnement des vérins amortisseurs 52, permettant tout d'abord d'amener les roues stabilisatrices 18 en contact avec le sol S, est illustrée schématiquement en trait pointillé fin sur la figure 2, dans le cas où la roue stabilisatrice 18 se trouve alors en face d'un trou T dans le sol. Elle est également illustrée sur les figures 4A à 4C, respectivement lorsque le sol S est plan, lorsque la roue stabilisatrice 18 se trouve en face d'une bosse B et lorsque la roue stabilisatrice 18 se trouve en face d'un trou T.

Ces différentes illustrations montrent que les moyens amortisseurs constitués par les vérins 52 permettent de compenser automatiquement les inégalités du sol, sans aucun désagrément pour les utilisateurs du véhicule.

Lorsque le stabilisateur est en position active, les vérins amortisseurs 52, servent aussi à corriger une éventuelle inclinaison du plan médian du véhicule par rapport à la verticale, détectée par l'un des capteurs inductifs 116. Une telle inclinaison peut être due à la force centrifuge ou au sol, qui peut présenter un dévers important.

Le redressement du véhicule s'effectue en faisant correspondre avec l'atmosphère, la chambre supérieure du premier vérin amortisseur 52, situé sur le côté opposé au capteur 116 déclenché. La chambre supérieure du second vérin amortisseur 52, est quant à elle reliée à la pression de consigne inversement proportionnelle à la vitesse.

Il est à noter que, la correction d'inclinaison ainsi effectuée est proportionnelle à la vitesse. Plus la vitesse est basse, plus le redressement est actif (par exemple 0 bar dans un vérin et 7 bars dans le vérin opposé) et inversement, plus la vitesse se rapproche de 20 km/h, moins le redressement est actif (par exemple 0 bar dans un vérin et 1 bar dans le vérin opposé). Dans ce dernier cas, la géométrie du châssis combinée à l'effet gyroscopique interviennent aussi pour maintenir la monotrace (inclinée ou non) en équilibre.

Lorsque le plan médian correspond à nouveau avec la verticale, les deux vérins amortisseurs 52 sont à nouveau reliés à la pression de consigne.

On décrira à présent, en se référant à la figure 5, le circuit pneumatique permettant de commander les vérins pneumatiques 26 de mise en position et les vérins amortisseurs 52, dans le mode de réalisation préféré de l'invention.

Sur la figure 5, on reconnaît les deux vérins 26 de mise en position des deux roues stabilisatrices latérales 18 du véhicule, ainsi que les deux vérins amortisseurs 52 servant à amener les roues stabilisatrices 18 en contact avec le sol et à régler la rigidité de l'amortissement en fonction de la vitesse.

Chacun des vérins 26 de mise en position comprend une chambre supérieure et une chambre inférieure. Un distributeur commun 58 à centre fermé, apte à être commandé par des signaux émis par le circuit électronique 24 (figure 1), permet d'amener, selon le cas, les vérins 26 dans leur état rétracté ou dans leur état de plein allongement, en fonction desdits signaux. Au repos, le distributeur 58 occupe sa position centrale fermée illustrée schématiquement sur la figure 5.

Une canalisation 60 d'amenée d'air comprimé relie un orifice d'entrée du distributeur 58 à une source d'air comprimé incluant notamment dans ce cas un compresseur principal 62 et un compresseur secondaire 64. Une première canalisation de sortie 66 relie un premier orifice de sortie du distributeur 58 aux chambres supérieures des vérins 26 de mise en position et une deuxième canalisation de sortie 68 relie un deuxième orifice de sortie du distributeur 58 aux chambres inférieures des vérins 26. Au repos, le distributeur 58 obture les extrémités des canalisations 60, 66 et 68.

Lorsque le signal émis par le circuit électronique 24 (figure 1) a pour effet de déplacer le tiroir du distributeur 58 vers la droite en considérant la figure 5, l'orifice d'entrée du distributeur est reliée à son premier orifice de sortie et le deuxième orifice de sortie est mis à l'atmosphère. Par conséquent, les chambres inférieures des vérins 26 sont mises à l'atmosphère et de l'air comprimé est admis dans les chambres supérieures des vérins 26. Les roues stabilisatrices 18 du véhicule sont alors amenées dans leur état actif tel qu'illustré en trait plein sur la figure 2.

A l'inverse, lorsque le signal émis par le circuit électronique 24 commande un déplacement du tiroir du distributeur 58 vers la gauche en considérant la figure 5, l'orifice d'entrée du distributeur est relié au deuxième orifice de sortie et le premier orifice de sortie est mis à l'atmosphère. Par conséquent, les chambres supérieures des vérins 26 sont mises à l'atmosphère et de l'air comprimé est admis dans les chambres inférieures des vérins 26. Les roues stabilisatrices 18 sont ainsi toutes deux amenées simultanément dans leur état escamoté.

Chacun des vérins amortisseurs pneumatiques 52 comprend également une chambre supérieure, de réglage de rigidité, et une chambre inférieure, de commande d'état rétracté.

La commande de ces vérins amortisseurs pneumatiques 52 est assurée par des moyens de régulation d'amortissement. Ces moyens de régulation d'amortissement comprennent un circuit apte à alimenter en air comprimé la chambre supérieure de chacun des vérins amortisseurs, à partir de la même source d'air comprimé, c'est-à-dire à partir du compresseur principal 62 et du compresseur secondaire 64.

Ce circuit d'alimentation en air comprimé inclut une canalisation commune 70 dans laquelle est placé un moyen commun apte à régler la pression d'air comprimé dirigée vers les chambres supérieures des vérins 52 à une pression de consigne, inversement proportionnelle à la vitesse mesurée par les moyens 22 de mesure de vitesse. Ce moyen commun peut notamment être constitué par un translateur tension/pression 72, apte à délivrer de l'air comprimé à un niveau de pression inversement proportionnel à un signal de tension réglable délivré automatiquement par le circuit électronique 24, lorsque la vitesse mesurée par les moyens 22 de mesure de vitesse est inférieure au seuil prédéterminé. On établit ainsi, en aval du translateur tension/pression 72, une pression de consigne qui augmente progressivement au fur et à mesure que la vitesse du véhicule diminue en-deçà du seuil de vitesse prédéterminé (par exemple, d'environ 20 km/h).

En aval du translateur tension/pression 72, la canalisation 70 est raccordée à l'un des deux orifices d'entrée d'un distributeur 74 normalement fermé. Le second orifice d'entrée de ce distributeur 74 est obturé et normalement relié à un orifice de sortie unique, apte à être mis en communication avec la chambre supérieure de chacun des vérins amortisseurs 52 par deux canalisations séparées 76. Chacune de ces canalisations 76 constitue un circuit indépendant de limitation de pression pour le vérin amortisseur 52 correspondant.

L'ouverture du distributeur 74, mettant en communication la canalisation 70 avec chacune des canalisations 76, est commandée automatiquement par un signal émis par le circuit électronique 24, dès que les roues stabilisatrices latérales 18 arrivent dans leur état actif.

Entre le distributeur 74 et la chambre supérieure de chacun des vérins amortisseurs 52, chacune des canalisations 76 traverse dans cet ordre un clapet anti-retour 78, une vanne d'échappement rapide 80 et un distributeur 82 normalement ouvert.

Les clapets anti-retour 78 sont disposés de façon à autoriser le passage de l'air comprimé vers les chambres supérieures des vérins amortisseurs 52, tout en interdisant la circulation de l'air en sens inverse.

Chacune des vannes d'échappement rapide 80 constitue un moyen apte à comparer la pression effective régnant dans la chambre supérieure du vérin amortisseur 52 à la pression de consigne, établie dans la canalisation 70, en aval du translateur tension/pression 72.

Chacune des vannes 80 d'échappement rapide comprend un orifice d'entrée, sur lequel est raccordé un tronçon amont de la canalisation 76, incluant le clapet anti-retour 78, et un orifice de sortie, sur lequel est raccordé un tronçon aval de la canalisation 76, menant au vérin amortisseur 52. Chaque vanne 80 d'échappement rapide comprend aussi un orifice d'échappement.

Chacune des vannes 80 d'échappement rapide est commandée par un tiroir, illustré schématiquement en 84 sur la figure 5. Ce tiroir 84 est sensible aux pressions antagonistes régnant dans les parties amont et aval de la canalisation 76. Ces pressions antagonistes sont la pression de consigne et la pression effective dans la chambre supérieure du vérin amortisseur 52.

Lorsque la pression régnant dans la chambre supérieure de chacun des vérins amortisseurs 52 est inférieure à la pression de consigne établie par le translateur tension/pression 72 (les distributeurs 74 et 82 étant ouverts) le tiroir 84 de la vanne 80 d'échappement rapide est déplacé vers la gauche en considérant la figure 5. La vanne 80 met alors en communication les parties amont et aval de la canalisation 76 correspondante et son orifice d'échappement est obturé.

Au contraire, lorsque la pression régnant dans la chambre supérieure de chacun des vérins amortisseurs 52 est supérieure à la pression de consigne instaurée en aval du translateur tension/pression 72 (les distributeurs 74 et 82 étant ouverts) le tiroir 84 de la vanne 80 d'échappement rapide est déplacé vers la droite, comme l'illustre la figure 5. L'orifice d'entrée de la vanne 80, relié au translateur 72 au travers du distributeur 74, est alors fermé et les orifices de sortie et d'échappement sont mis en communication l'un avec l'autre.

Les orifices d'échappement des deux vannes 80 à échappement rapide sont reliés à l'orifice d'entrée unique d'un distributeur commun 86 normalement fermé, par deux canalisations 88 dont chacune est équipée d'un clapet anti-retour 90. Dans l'état normal de fermeture du distributeur commun 86, son orifice d'entrée communique avec un premier orifice de sortie obturé.

Lorsque les roues stabilisatrices latérales 18 arrivent dans leur état actif, le circuit électronique 24 émet un signal d'excitation du distributeur commun 86. Sous l'effet de ce signal, l'orifice d'entrée du distributeur est mis en communication avec un deuxième orifice de sortie, sur lequel est raccordée une canalisation d'échappement 92.

Lorsque les moyens de détection d'inclinaison 23 du plan médian du véhicule (précédemment décrits) sont actifs, un signal est émis par le circuit électronique 24 et transmis aux distributeurs 82 ou 94. Dans le cas d'une inclinaison comme illustré sur la figure 3C (inclinaison exagérée), le capteur inductif 116 situé du côté de l'inclinaison émet un signal qui a pour effet d'actionner le distributeur 82 correspondant au côté opposé à l'inclinaison. Le tiroir de ce distributeur 82 se déplace vers la gauche de façon à relier la canalisation 76 à l'échappement du distributeur. Ainsi, la pression régnant dans la canalisation 76 devient égale à l'atmosphère. Par conséquent la course du vérin 52 situé du côté opposé à l'inclinaison peut diminuer facilement au fur et à mesure que le vérin 52 situé du côté de l'inclinaison, dont la chambre supérieure est établie à la pression de consigne, augmente sa course.

L'explication est la même pour une inclinaison du plan médian du véhicule dans le sens opposé.

Le tronçon aval de chacune des canalisations 76, par rapport à la vanne 80, comprend une première partie reliée à un premier orifice d'entrée du distributeur 82 correspondant, et une deuxième partie, reliant un orifice de sortie unique du distributeur 82 à la chambre supérieure du vérin amortisseur 52 correspondant. Lorsque le distributeur 82 est dans son état normal ouvert, ces deux parties du tronçon aval de la canalisation 76 communiquent l'une avec l'autre.

Lorsque la vitesse du véhicule s'élève au-dessus du seuil prédéterminé défini précédemment, le circuit électronique 24 délivre un signal d'excitation de chacun des distributeurs 82. Ces derniers passent alors dans un état dans lequel leur orifice de sortie est isolé du premier orifice d'entrée et mis en communication avec un deuxième orifice d'entrée du distributeur 82, relié à l'atmosphère extérieure.

Pour compléter le circuit pneumatique de commande des vérins amortisseurs 52, on voit sur la figure 5 que la chambre inférieure de chacun de ces vérins est reliée à l'orifice de sortie unique d'un distributeur commun 94, normalement fermé, par une canalisation 95. Le distributeur 94 est destiné à piloter la rentrée des vérins 52.

Dans la position normale de fermeture du distributeur 94, son orifice de sortie communique avec un premier orifice d'entrée qui est relié à l'entrée du distributeur 86 par une canalisation 96 munie d'un clapet anti-retour 98.

Lorsque la vitesse du véhicule s'élève au-dessus du seuil prédéterminé défini précédemment, le circuit électronique 24 émet un signal d'excitation du distributeur 94. Sous l'effet de ce signal, le distributeur 94 bascule dans un état dans lequel son orifice de sortie unique est relié au deuxième orifice d'entrée, communiquant avec les compresseurs 62 et 64 par une canalisation 100.

Comme on l'a illustré schématiquement sur la figure 5, chacun des vérins pneumatiques 26 de mise en position est équipé d'un détecteur de fin de course haute 102 et d'un détecteur de fin de course basse 104. Par ailleurs, chacun des vérins amortisseurs pneumatiques 52 est muni d'un détecteur de fin de course haute 106. Chacun des détecteurs de fin de course 102, 104 et 106 est apte à émettre un signal électrique, transmis au circuit électronique 24, lorsque le vérin correspondant est dans l'état qu'il est appelé à détecter.

On décrira à présent le fonctionnement du dispositif de stabilisation équipant le véhicule conforme à l'invention.

Lorsque le véhicule est à l'arrêt, les roues stabilisatrices latérales 18 sont sorties et la pression régnant dans la chambre supérieure de chacun des vérins amortisseurs 52 est maximale. On se trouve alors dans l'état nominal illustré sur la figure 5. Dans cet état, les vérins 26 et 52 sont en pleine extension, et tous les distributeurs sont à l'état de repos.

Dès que le véhicule démarre, les distributeurs 74 et 86 basculent immédiatement dans leur état ouvert et le translateur tension/pression 72 est mis en oeuvre, afin de régler la pression nominale en fonction de la vitesse. En revanche, les distributeurs 58, 82 et 94 restent dans leur état nominal.

Dans ces conditions, la valeur de la pression dans la chambre supérieure de chacun des vérins amortisseurs 52 est réglée indépendamment, sous l'action combinée du translateur tension/pression 72 et des vannes d'échappement rapide 80.

Ainsi, dans l'hypothèse d'un démarrage du véhicule impliquant une augmentation régulière de la vitesse, la pression nominale à la sortie du translateur tension/pression 72 tend à diminuer. Les vannes d'échappement rapide 80 permettent à la pression effective dans les chambres supérieures des vérins amortisseurs 52 de suivre cette diminution, par la mise en communication du tronçon aval de chacune des canalisations 76 avec la canalisation d'échappement 92, au travers du distributeur 86, alors en position ouverte.

La pression régnant dans les chambres supérieures des vérins amortisseurs 52 diminue ainsi progressivement avec la vitesse du véhicule, de telle sorte que la maniabilité de ce dernier se rapproche progressivement de celle d'une motocyclette au fur et à mesure que le besoin d'une stabilisation latérale efficace du véhicule va en diminuant.

Lorsque le seuil de vitesse prédéterminé, par exemple de 20 km/h est atteint, le circuit électronique 24 émet immédiatement des ordres d'excitation des distributeurs 82 et 94, afin d'assurer la rentrée des vérins amortisseurs 52.

Du fait de l'excitation des distributeurs 82, la chambre supérieure de chacun des vérins amortisseurs 52 est mise à l'atmosphère. L'excitation simultanée du distributeur 94 a pour effet de relier les chambres inférieures des vérins 52 aux compresseurs 62 et 64. La rentrée des vérins amortisseurs 52 est ainsi assurée très rapidement.

Lorsque la rentrée des vérins amortisseurs 52 est effective, les détecteurs de fin de course 106 émettent des signaux correspondants qui sont transmis au circuit électronique 24. Dès la réception de ces signaux, le circuit électronique 24 commande l'excitation du distributeur 58, vers la gauche en considérant la figure 5. Par conséquent, les chambres supérieures des vérins 26 de mise en position sont mises à l'atmosphère alors que leurs chambres inférieures sont mises en communication avec les compresseurs 62 et 64. Les roues stabilisatrices latérales sont ainsi ramenées rapidement dans leur état escamoté. Dès la détection de cet état par les détecteurs de fin de course 102, le circuit électronique 24 cesse d'exciter les distributeurs 58, 74, 82, 86 et 94.

Lorsque le véhicule roule à une vitesse supérieure au seuil de vitesse prédéterminé, les différents vérins 26 et 52 sont dans leur état rétracté et les distributeurs du circuit pneumatique occupent tous leur état nominal illustré sur la figure 5.

Lorsque le véhicule ralentit et franchit le seuil de vitesse prédéterminé, par exemple de 20 km/h, dans le sens de la descente, le circuit électronique 24 émet immédiatement un signal d'excitation du distributeur 58. Ce signal d'excitation a pour effet de déplacer le tiroir de ce distributeur vers la droite en considérant la figure 5. Ainsi, les chambres inférieures des vérins 26 de mise en position sont mises à l'atmosphère et les chambres supérieures de ces vérins sont reliées aux compresseurs 62 et 64. Par conséquent, les roues stabilisatrices latérales 18 du véhicule sont amenées dans leur état actif, tel qu'illustré sur les figures 3A et 3B, par un déploiement des mécanismes articulés 20.

Lorsque l'arrivée des vérins 26 de mise en position dans leur état déployé est détectée par les détecteurs de fin de course 104, ces derniers émettent un signal qui est transmis au circuit électronique 24. Dès réception de ce signal, le circuit électronique 24 émet un signal d'excitation des distributeurs 74 et 86 qui passent ainsi dans leur état ouvert. Simultanément, le circuit électronique émet un signal de tension proportionnel à la vitesse du véhicule. Ce signal de tension est appliqué sur le translateur tension/pression 72, de façon à établir, en amont de celui-ci, une pression de consigne inversement proportionnelle à la vitesse. La pression dans la chambre supérieure de chacun des vérins amortisseurs 52 augmente alors au fur et à mesure que la vitesse du véhicule diminue. On obtient ainsi une évolution de la rigidité des vérins amortisseurs en fonction de la vitesse, qui permet de faire passer progressivement le comportement du véhicule d'un comportement de type motocyclette à un comportement de type véhicule à quatre roues, au fur et à mesure que la vitesse diminue.

Il est à noter que les vannes 80 à échappement rapide permettent de maintenir, de manière indépendante, la pression dans la chambre supérieure de chacun des vérins amortisseurs 52 à la valeur de consigne, même en présence d'inégalités sur le sol qui se trouve en face de la roue stabilisatrice latérale 18 correspondante.

Ainsi, en supposant la vitesse du véhicule constante et inférieure au seuil prédéterminé, sur un sol parfaitement plat les vannes 80 à échappement rapide occupent leur position de fermeture de leur orifice d'échappement. La pression à la sortie du translateur tension/pression 72 est alors transmise intégralement dans la chambre supérieure du vérin amortisseur 52.

Si la partie du sol en face de laquelle se trouve la roue stabilisatrice 18 présente une bosse B (figure 4B), la roue stabilisatrice remonte et comprime l'air contenu dans la chambre supérieure du vérin 52 correspondant. Par conséquent, la pression dans cette chambre augmente et devient supérieure à la pression de consigne établie par le translateur tension/pression 72. Le tiroir 84 de la vanne à échappement rapide 80 se déplace alors immédiatement afin d'autoriser un échappement rapide de l'air comprimé en excédent vers la canalisation d'échappement 92, au travers du distributeur 86 alors ouvert. Dès que la pression dans la chambre supérieure du vérin 52 est revenue à la pression de consigne, le tiroir 84 de la vanne à échappement rapide 80 se déplace à nouveau afin d'obturer l'orifice d'échappement de cette vanne.

A l'inverse, si la roue stabilisatrice latérale 18 se trouve en face d'un trou T, comme l'illustre la figure 4C, le vérin 52 tend à s'allonger et la pression dans sa chambre supérieure diminue. Par conséquent, cette pression devient inférieure à la pression de consigne établie par le translateur tension/pression 72. Dans ces conditions, le tiroir 84 se déplace de façon à autoriser l'admission d'air comprimé en provenance du translateur, jusqu'à ce que la pression de consigne soit rétablie dans la chambre supérieure du vérin.

Il est à noter que cette aptitude des vérins amortisseurs 52 à présenter une rigidité correspondant à la valeur de consigne en présence d'irrégularités du sol découle du fait que chacun de ces vérins dispose d'une course importante, dans le sens de l'allongement comme dans le sens de la rentrée, par rapport à l'allongement qu'il présente lorsque le sol est parfaitement plan. Cette possibilité est illustrée notamment par les figures 4A à 4C. A titre d'exemple, chaque vérin amortisseur 52 dispose d'une course de 60 mm en compression et de 100 mm en détente.

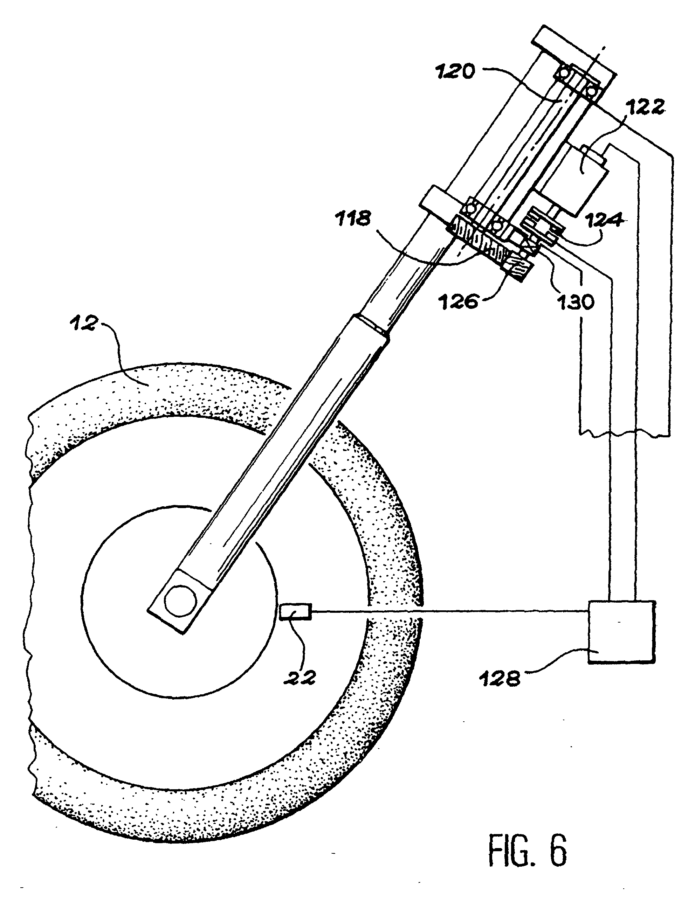

Comme on l'a illustré schématiquement sur la figure 6, le confort de conduite du véhicule est encore amélioré en dotant celui-ci d'une direction assistée, active uniquement lorsque les stabilisateurs sont déployés, c'est-à-dire en dessous de 20 km/h environ. L'assistance est alors inversement proportionnelle à la vitesse et proportionnelle au couple de direction. Elle permet de compenser la "lourdeur" de la direction provoquée par l'activation des stabilisateurs et la diminution de la vitesse.

A titre d'exemple, la direction peut être assistée électriquement.

La roue 118 menée par la vis sans fin 126, constitue un ensemble réducteur de vitesse du moteur électrique 122.

Le moteur 122 et l'embrayage 124 sont commandés par des signaux en provenance d'un calculateur 128. Celui-ci reçoit les signaux délivrés par le capteur de vitesse 22, et par un capteur 130 mesurant le couple transmis à la colonne de direction et le sens de la rotation.

Lorsque la vitesse du véhicule est supérieure au seuil de déploiement des stabilisateurs (environ 20 km/h), l'embrayage 124 est actionné de façon à désaccoupler le moteur 122 de la colonne de direction. En deçà de ce seuil de vitesse, l'intensité de l'assistance fournie par le moteur électrique 122 est inversement proportionnelle à la vitesse et proportionnelle au couple de direction.

Bien entendu, l'invention n'est pas limitée au mode de réalisation qui vient d'être décrit à titre d'exemple, mais en couvre toutes les variantes et équivalents techniques, dans le cadre des revendications annexées. Parmi ces variantes, on notera la possibilité de remplacer le système pneumatique décrit par un système hydraulique, par un système oléopneumatique avec pilotage du gaz de précharge, ou par un système électrique contrôlant le couple de rotation de la biellette 48 de chaque mécanisme articulé. On pourra également utiliser comme moyen amortisseur un vérin souple à soufflets associé à un vérin pneumatique à simple effet, ou tout autre dispositif à longueur variable, permettant de contrôler la rigidité et pouvant se rétracter pour un encombrement minimal.

Le circuit électronique 24 peut également traiter des signaux en provenance d'autres capteurs aptes à mesurer par exemple l'accélération latérale du véhicule, ou bien la rotation du guidon. Grâce à un algorithme approprié le circuit est alors apte à contrôler avec plus de précision l'angle du plan médian de la monotrace avec la verticale.

On peut également prévoir plusieurs choix d'algorithmes possibles pour le conducteur : conducteur débutant, confirmé, route glissante, etc.. Le circuit commande alors la montée et la descente du stabilisateur et corrige l'inclinaison du véhicule et la rigidité des moyens amortisseurs, en fonction des aptitudes du conducteur ou des conditions de circulation, en plus des signaux émis par les différents capteurs. Dans le système pneumatique décrit, l'ensemble translateur tension/pression, vannes d'échappement rapide peut être remplacé par un asservissement classique en boucle fermé, utilisant deux vannes d'autorégulation coûteuses.

## Revendications

1. Véhicule de type monotrace, comprenant un châssis (10) apte à reposer sur le sol (S) par deux roues principales (12, 14) alignées et par deux roues stabilisatrices latérales (18) escamotables, ledit véhicule comprenant de plus des moyens (22) de mesure de vitesse aptes à mesurer la vitesse de déplacement du véhicule, et des moyens de commande automatique (24, 58, 26) des roues stabilisatrices (18), sensibles à la vitesse mesurée par lesdits moyens (22) de mesure de vitesse pour placer automatiquement les roues stabilisatrices dans un état escamoté lorsque la vitesse mesurée excède un seuil prédéterminé, et dans un état actif lorsque la vitesse mesurée est inférieure audit seuil, **caractérisé en ce que** des moyens amortisseurs (52), à rigidité réglable, sont associés à chacune des roues stabilisatrices (18), et des moyens (72, 80) de régulation d'amortissement asservissent automatiquement la rigidité de chacun des moyens amortisseurs à la vitesse mesurée par lesdits moyens (22) de mesure de vitesse, lorsque les roues stabilisatrices (18) sont dans leur état actif, de façon telle que ladite rigidité varie en sens inverse de la vitesse mesurée.

2. Véhicule selon la revendication 1, dans lequel des moyens (23) sont prévus pour détecter une inclinaison du plan médian du véhicule par rapport à la verticale, de façon à commander un asservissement automatique de la rigidité de chacun des moyens amortisseurs (52), lorsque les roues stabilisatrices (18) sont dans leur état actif, pour ramener ledit plan médian vers la verticale, de façon inversement proportionnelle à la vitesse.

3. Véhicule selon l'une quelconque des revendications 1 et 2, dans lequel les moyens amortisseurs (52) occupent un état rétracté lorsque les roues stabilisatrices (18) sont dans leur état escamoté ainsi que lorsque les moyens de commande automatique (24, 58, 26) sont actionnés pour commander un basculement entre les états escamoté et actif des roues stabilisatrices.

4. Véhicule selon la revendication 3, dans lequel lorsque les roues stabilisatrices (18) sont dans leur état actif et lorsque les moyens amortisseurs (52) occupent leur état rétracté, les roues stabilisatrices (18) sont situées à une hauteur prédéterminée au-dessus d'un plan de contact des roues principales (12, 14) avec le sol, ledit plan étant perpendiculaire à un plan médian du véhicule.

5. Véhicule selon la revendication 4, dans lequel des premiers moyens de détection (104) sont prévus pour détecter un passage des roues stabilisatrices (18) dans leur état actif, les moyens (72, 80) de régulation d'amortissement étant sensibles à un premier signal de détection délivré par lesdits premiers moyens de détection pour commander automatiquement un actionnement des moyens amortisseurs (52) jusqu'à la venue en contact des roues stabilisatrices (18) avec le sol, puis un asservissement automatique de la rigidité des moyens amortisseurs.

6. Véhicule selon l'une quelconque des revendications 4 et 5, dans lequel des deuxièmes moyens de détection (106) sont prévus pour détecter un passage des moyens amortisseurs (52) dans leur état rétracté, les moyens de commande automatique (24, 58, 26) étant sensibles à un deuxième signal de détection délivré par les deuxièmes moyens de détection, pour ramener automatiquement les roues stabilisatrices dans leur état escamoté.

7. Véhicule selon l'une quelconque des revendications précédentes, dans lequel les moyens amortisseurs associés à chacune des roues stabilisatrices (18) comprennent un vérin amortisseur pneumatique (52).

8. Véhicule selon l'une quelconque des revendications précédentes, dans lequel les moyens de régulation d'amortissement comprennent un circuit d'alimentation en air comprimé d'une chambre de réglage de rigidité de chacun des moyens amortisseurs (52), ledit circuit incluant une source (62, 64) d'air comprimé et un moyen (72) apte à régler la pression d'air comprimé dirigée vers lesdites chambres, à une pression de consigne, inversement proportionnelle à la vitesse mesurée par lesdits moyens (22) de mesure de vitesse.

9. Véhicule selon la revendication 8, dans lequel les moyens de régulation d'amortissement comprennent de plus un circuit de limitation de pression indépendant pour chacun des moyens amortisseurs (52), chaque circuit de limitation de pression étant apte à relier la chambre de réglage de rigidité de l'un desdits moyens amortisseurs au circuit d'alimentation, au travers d'un moyen (80) apte à comparer la pression effective régnant dans ladite chambre à la pression de consigne, pour mettre cette chambre en communication avec le circuit d'alimentation lorsque la pression effective est inférieure à la pression de consigne, et avec l'atmosphère dans le cas contraire.

10. Véhicule selon la revendication 9, dans lequel ledit moyen apte à comparer la pression effective à la pression de consigne est une vanne (80) d'échappement rapide commandée par un tiroir sensible à des pressions antagonistes correspondant à la pression effective et à la pression de consigne.

11. Véhicule selon l'une quelconque des revendications 9 et 10, dans lequel un distributeur (86) normalement fermé est placé entre l'atmosphère et ledit moyen (80) apte à comparer la pression effective à la pression de consigne, une ouverture du distributeur (86) étant commandée automatiquement lors du passage des roues stabilisatrices (18) dans leur état actif.

12. Véhicule selon l'une quelconque des revendications précédentes, dans lequel chacune des roues stabilisatrices (18) est reliée au châssis (10) par un mécanisme (20) apte à se déployer et à se verrouiller automatiquement par gravité, pour amener cette roue dans ledit état actif, en cas de défaillance des moyens (24, 26) de commande automatique.

13. Véhicule selon l'une quelconque des revendications précédentes, dans lequel les moyens de commande automatique comprennent deux vérins pneumatiques (26) de mise en position, munis chacun de deux chambres de commande opposées, aptes à être reliées à tour de rôle à une source d'air comprimé, par l'intermédiaire d'un distributeur commun (58) à centre fermé.

14. Véhicule selon l'une quelconque des revendications précédentes, dans lequel des moyens (122) d'assistance de direction, automatiquement déconnectés lorsque la vitesse du véhicule excède ledit seuil, assistent la direction du véhicule de façon inversement proportionnelle à la vitesse du véhicule et proportionnelle au couple de direction mesuré par un capteur (130) approprié.

## Patentansprüche

1. Fahrzeug vom Einspurtyp, umfassend einen Rahmen (10), der dazu ausgelegt ist, mittels zweier zueinander ausgerichteter Haupträder (12, 14) und zweier einziehbarer seitlicher Stabilisierungsräder (18) auf dem Boden (S) zu ruhen, wobei das Fahrzeug femer Mittel (22) zur Geschwindigkeitsmessung umfasst, die dazu ausgelegt sind, die Verlagerungsgeschwindigkeit des Fahrzeugs zu messen, sowie Mittel zur automatischen Steuerung (24, 58, 26) der Stabilisierungsräder (18), welche empfindlich sind für die von den Geschwindigkeitsmessmitteln (22) gemessene Geschwindigkeit, um die Stabilisierungsräder automatisch in einen eingezogenen Zustand zu plazieren, wenn die gemessene Geschwindigkeit eine vorbestimmte Schwelle überschreitet, und in einen aktiven Zustand, wenn die gemessene Geschwindigkeit kleiner als die Schwelle ist, **dadurch gekennzeichnet, dass** jedem der Stabilisierungsräder (18) Dämpfungsmittel (52) mit regelbarer Steifigkeit zugeordnet sind, und dass Dämpfungsregelungsmittel (72, 80) automatisch die Steifigkeit jedes der Dämpfungsmittel abhängig von der durch die Geschwindigkeitsmessmittel (22) gemessenen Geschwindigkeit im aktiven Zustand der Stabilisierungsräder (18) derart regeln, dass die Steifigkeit in umgekehrter Richtung zur gemessenen Geschwindigkeit variiert.

2. Fahrzeug nach Anspruch 1, bei dem Mittel (23) vorgesehen sind, um eine Neigung der Mittelebene des Fahrzeugs bezüglich der Vertikalen zu erfassen, um im aktiven Zustand der Stabilisierungsräder (18) eine automatische Regelung der Steifigkeit jedes der Dämpfungsmittel (52) umgekehrt proportional zur Geschwindigkeit zu befehlen, um die Mittelebene in die Vertikale zurückzubringen.

3. Fahrzeug nach einem der Ansprüche 1 und 2, bei dem die Dämpfungsmittel (52) einen zurückgezogenen Zustand einnehmen, wenn die Stabilierungsräder (18) in ihrem zurückgezogenen Zustand sind, und wenn die automatischen Steuermittel (24, 58, 26) dazu betätigt werden, ein Umschalten zwischen dem zurückgezogenen und dem aktiven Zustand der Stabilisierungsräder zu steuern.

4. Fahrzeug nach Anspruch 3, bei dem dann, wenn die Stabilisierungsräder (18) in ihrem aktiven Zustand sind, und wenn die Dämpfungsmittel (52) ihren zurückgezogenen Zustand einnehmen, die Stabilisierungsräder (18) in einer vorbestimmten Höhe über einer Kontaktebene der Haupträder (12, 14) mit dem Boden liegen, wobei die Ebene orthogonal zu einer Mittelebene des Fahrzeugs ist.

5. Fahrzeug nach Anspruch 4, bei dem erste Erfassungsmittel (104) vorgesehen sind, um einen Übergang der Stabilisierungsräder (18) in ihren aktiven Zustand zu erfassen, wobei die Dämpfungsregelungsmittel (72, 80) empfindlich sind für ein von den ersten Erfassungsmitteln geliefertes erstes Erfassungssignal, um automatisch eine Betätigung der Dämpfungsmittel (52) zu befehlen, bis die Stabilisierungsräder (18) in Kontakt mit dem Boden gelangt sind, und dann eine automatische Regelung der Steifigkeit der Dämpfungsmittel zu befehlen.

6. Fahrzeug nach einem der Ansprüche 4 und 5, bei dem zweite Erfassungsmittel (106) vorgesehen sind, um einen Übergang der Dämpfungsmittel (52) in ihren zurückgezogenen Zustand zu erfassen, wobei die automatischen Steuermittel (24, 58, 26) empfindlich sind für ein von den zweiten Erfassungsmitteln geliefertes zweites Erfassungssignal, um automatisch die Stabilisierungsräder in ihren zurückgezogenen Zustand zu bringen.

7. Fahrzeug nach einem der vorhergehenden Ansprüche, bei dem die jedem der Stabilisierungsräder (18) zugeordneten Dämpfungsmittel einen pneumatischen Dämpfungszylinder (52) umfassen.

8. Fahrzeug nach einem der vorhergehenden Ansprüche, bei dem die Dämpfungsregelungsmittel einen Kreis zur Druckluftversorgung einer Steifigkeitsregelkammer jedes der Dämpfungsmittel (52) umfassen, wobei der Kreis eine Druckluftquelle (62, 64) und eine Einrichtung (72) umfasst, die dazu ausgelegt ist, den Druck der zu den Kammem geleiteten Druckluft auf einen Einstelldruck zu regeln, der umgekehrt proportional zu der von den Geschwindigkeitsmessmiteln (22) gemessenen Geschwindigkeit ist.

9. Fahrzeug nach Anspruch 8, bei dem die Dämpfungsregelungsmittel ferner einen unabhängigen Druckbegrenzungskreis für jedes der Dämpfungsmittel (52) umfassen, wobei jeder Druckbegrenzungskreis dazu ausgelegt ist, die Steifigkeitsregelkammer eines der Dämpfungsmittel mit dem Versorgungskreis zu verbinden, und zwar mittels einer Einrichtung (80), die dazu ausgelegt ist, den in der Kammer herrschenden effektiven Druck mit dem Einstelldruck zu vergleichen, um diese Kammer in Verbindung mit dem Versorgungskreis zu bringen, wenn der effektive Druck kleiner als der Einstelldruck ist, und mit der Umgebung im entgegengesetzten Fall.

10. Fahrzeug nach Anspruch 9, bei dem die Einrichtung, die dazu ausgelegt ist, den effektiven Druck mit dem Einstelldruck zu vergleichen, ein Schnellauslassventil (80) ist, das von einem Schieber gesteuert wird, der empfindlich ist für entgegensetzte Drücke entsprechend dem effektiven Druck und dem Einstelldruck.

11. Fahrzeug nach einem der Ansprüche 9 und 10, bei dem ein normalerweise geschlossener Verteiler (86) zwischen der Umgebung und der Einrichtung (80) angeordnet ist, die dazu ausgelegt ist, den effektiven Druck mit dem Einstelldruck zu vergleichen, wobei beim Übergang der Stabilisierungsräder (18) in ihren aktiven Zustand automatisch ein Öffnen des Verteilers (86) befohlen wird.

12. Fahrzeug nach einem der vorhergehenden Ansprüche, bei dem jedes der Stabilisierungsräder (18) mit dem Rahmen (10) mittels eines Mechanismus (20) verbunden ist, der dazu ausgelegt ist, sich automatisch durch Schwerkraft zu entfalten und sich zu verriegeln, um dieses Rad beim Ausfall der automatischen Steuermittel (24, 26) in den aktiven Zustand zu bringen.

13. Fahrzeug nach einem der vorhergehenden Ansprüche, bei dem die automatischen Steuermittel zwei pneumatische Positionierungszylinder (26) umfassen, die jeweils mit zwei entgegengesetzten Steuerkammem versehen sind, welche dazu ausgelegt sind, mittels eines gemeinsamen Verteilers (58) mit geschlossener Mitte abwechselnd mit einer Druckluftquelle verbunden zu werden.

14. Fahrzeug nach einem der vorhergehenden Ansprüche, bei dem Lenkunterstützungsmittel (122), die automatisch abgeschaltet werden, wenn die Fahrzeuggeschwindigkeit die Schwelle überschreitet, das Lenken des Fahrzeugs umgekehrt proportional zur Fahrzeuggeschwindigkeit und proportional zum von einem geeigneten Sensor (130) gemessenen Lenkmoment unterstützen.

## Claims

1. Vehicle of the "monotrace" type, comprising a chassis (10) able to rest on the ground (S) via two aligned main wheels (12, 14) and via two retractable side stabilizer wheels (18), the said vehicle additionally comprising speed-measuring means (22) able to measure the speed of travel of the vehicle, and automatic control means (24, 58, 26) for controlling the stabilizer wheels (18), which means are sensitive to the speed measured by the said speed-measuring means (22) to automatically place the stabilizer wheels in a retracted state when the measured speed exceeds a predetermined threshold, and in an active state when the measured speed is below the said threshold, **characterized in that** adjustable-rigidity damping means (52) are associated with each of the stabilizing wheels (18), and damping-regulating means (72, 80) automatically slave the rigidity of each of the damping means to the speed measured by the said speed-measuring means (22) when the stabilizing wheels (18) are in their active state, so that the said rigidity varies in inverse proportion to the measured speed.

2. Vehicle according to Claim 1, in which means (23) are provided for detecting an inclination of the mid-plane of the vehicle with respect to the vertical, so as to command automatic slaving of the rigidity of each of the damping means (52), when the stabilizing wheels (18) are in their active state, so as to return the said mid-plane towards the vertical, in a way inversely proportional to the speed.

3. Vehicle according to either one of Claims 1 and 2, in which the damping means (52) occupy a retracted state when the stabilizing wheels (18) are in their retracted state and when the automatic control means (24, 58, 26) are actuated to command switching of the stabilizing wheels between the retracted and active states.

4. Vehicle according to Claim 3, in which, when the stabilizing wheels (18) are in their active state and when the damping means (52) occupy their retracted state, the stabilizing wheels (18) are at a predetermined height above a plane of contact of the main wheels (12, 14) with the ground, the said plane being perpendicular to a mid-plane of the vehicle.

5. Vehicles according to Claim 4, in which first detection means (104) are provided for detecting passage of the stabilizing wheels (18) into their active state, the damping-regulating means (72, 80) being sensitive to a first detection signal delivered by the said first detection means to automatically command actuation of the damping means (52) until the stabilizing wheels (18) come into contact with the ground, then automatic sleaving of the rigidity of the damping means.

6. Vehicle according to either one of Claims 4 and 5, in which second detection means (106) are provided for detecting passage of the damping means (52) into their retracted state, the automatic control means (24, 58, 26) being sensitive to a second detection signal delivered by the second detection means to automatically return the stabilizing wheels to their retracted state.

7. Vehicle according to any one of the preceding claims, in which the damping means associated with each of the stabilizing wheels (18) comprise a pneumatic damping ram (52).

8. Vehicle according to any one of the preceding claims, in which the damping-regulating means comprise a circuit supplying compressed air to a chamber for adjusting the rigidity of each of the damping means (52), the said circuit including a compressed-air source (62, 64) and a means (72) able to set the compressed-air pressure sent to the said chambers to a reference pressure inversely proportional to the speed measured by the said speed-measuring means (22).

9. Vehicle according to Claim 8, in which the damping-regulating means additionally comprise a pressure-limiting circuit which is independent for each of the damping means (52), each pressure-limiting circuit being able to connect the rigidity-regulating chamber of one of the said damping means to the supply circuit through a means (80) able to compare the effective pressure in the said chamber with the reference pressure, in order to place this chamber in communication with the supply circuit when the effective pressure is below the reference pressure, and with the atmosphere in the contrary situation.

10. Vehicle according to Claim 9, in which the said means able to compare the effective pressure with the reference pressure is a rapid exhaust valve (80) operated by a slide sensitive to opposing pressures corresponding to the effective pressure and to the reference pressure.

11. Vehicle according to either one of Claims 9 and 10, in which a normally closed distributor (86) is placed between the atmosphere and the said means (80) able to compare the effective pressure with the reference pressure, opening of the distributor (86) being commanded automatically as the stabilizer wheels (18) pass to their active state.

12. Vehicle according to any one of the preceding claims, in which each of the stabilizing wheels (18) is connected to the chassis (10) by a mechanism (20) able to deploy and to lock automatically by gravity, in order to bring this wheel into the said active state, in the event of failure of the automatic control moans (24, 26).

13. Vehicle according to any one of the preceding claims, in which the automatic control means comprise two positioning pneumatic rams (26) each equipped with two opposed control chambers able to be connected, each in their turn, to a compressed-air source, via a closed-centre common distributor (58).

14. Vehicle according to any one of the preceding claims, in which power-assisted steering means (122), automatically disconnected when the speed of the vehicle exceeds the said threshold, assist with steering the vehicle in a manner inversely proportional to the speed of the vehicle and proportional to the steering torque measured by an appropriate sensor (130).
